# EUROPEAN PATENT APPLICATION

(11) **EP 4 686 988 A1**
(43) Date of publication of application: **04.02.2026**
(21) Application number: 24192723.5
(22) Date of filing: 02.08.2024
(51) Int. Cl.: G05B 15/02, G07C 9/00, G05B 19/042

(54) **APPARATUSES AND SYSTEM FOR CONTROLLING ACTORS OF A LIVING OR WORKING UNIT**

(71) Applicant: GreenAutarky UG, 10827 Berlin (DE)
(72) Inventor: MOKHTARI, Ramin Lavae, 14471 Potsdam (DE)
(74) Representative: Cohausz & Florack

(57) **Abstract**

The invention concerns a system comprising

- a first apparatus comprising

-- access means for accessing at least one storage element for storing personal occupant data, wherein the access means comprise a receptacle configured to removably hold the storage element and are protected by at least one security layer,

-- means for locally processing of at least parts of the personal occupant data by adjusting a configuration of at least one local machine learning model using at least the personal occupant data

-- means for controlling at least one actor of the living or working unit based on the local processing

and

- at least one remote apparatus comprising

-- means for communicating with at least two local apparatuses, configured to obtain at least a respective part of a respective at least one locally adjusted configuration of a respective local machine learning model from the at least two local apparatus

-- means for remote training, configured to determining a remotely adjusted configuration of at least one of the local machine learning model using the at least two locally adjusted configurations, and

-- wherein the means for communicating are further configured to provide at least a part of the remotely adjusted configuration to at least one of the at least two local apparatus.

## Description

### TECHNOLOGICAL FIELD

The present disclosure is related to but not limited to decentral AI methods and apparatus for enabling smart and efficient living and working in one or more living or working units, in particular by controlling or monitoring at least one actor in one living or working unit, such as one or more rooms of e.g., a flat, an office (e.g., dedicated office) and/or a house, in particular based on data regarding at least one actor and/or at least one sensor in the at least one living or working unit, in particular based on personal and/or building data for processing personal and/or building data in order to control or monitor the at least one actor of a living or working unit, whereby the one or more living or working units can be a whole building, containing one or flats, containing one or more rooms.

### BACKGROUND in living or working areas

Buildings such as apartments and houses have become complex structures with numerous technical appliances such as heaters, coolers, air filters, ventilation apparatus, lighting, kitchen appliances (e.g., coffee maker and/or water boiler), and/or combinations thereof. When controlled in the right way, this technological evolution of today's housing can lead to an unprecedented living and/or working comfort for a respective person and at the same time to an energy-efficient way of living and/or working.

The digital control of appliances may be performed in different ways, of which the simplest is a manual control by the occupant. As of today, there exists a large share of households in which all or most appliances are manually configured (e.g., by switching them on and off and/or regulating a respective parameter of an appliance based on a current demand). As a result, appliances are often used in an inefficient way (e.g., for too long and/or even though not currently required) and/or the living comfort is reduced (e.g., because an occupant is required to continuously interact with the building controls and/or can only control appliances while being in the building and e.g., may enter a cold, badly ventilated apartment after a working day).

Alternatively, already today, technologically interested and apt occupants and home-owners (e.g., landlords) may implement home automation systems based on, e.g., timers, sensors and/or actors and a suitably programmed logic, which are mostly cloud based. Such automation may both lead to a higher comfort of living and a more efficient use of appliances. Yet, installing automation systems is burdensome and time-consuming and requires extensive reconfiguration in case of a change in occupant needs. Solutions, which are installed locally by occupants are rare. Such Smart-Home solutions require high technical knowledge of the occupants, and often additional approval of building owners. As such solutions are mostly relying of smart phones and apps, they must also be upgraded often, e.g., as smart phone technologies change. In additional, with very fast growing of smart phone technologies, such as artificial intelligence, AI, it is very demanding to control data privacy in general. Other solutions which are installed by landlords and owners for rental buildings are typically only focused on equipments outside a living area, as the landlords are not allowed to collect personal data of tenants. Also, as landlords forward all operating costs to tenants, they are not willing to invest in efficient solutions, for example to achieve the European emission reduction goals. It is currently a major dilemma by achieving the Climate Protection Law, because the investor (such as landlord) must bear all the cost, but the user (such as tenant) has all the benefits. The dilemma gets worse, because any investment must be based on accurate information (data), which are missing as well, because the investor may not access the user data due to data privacy.

On the other side the political landscape and new regulations enforce changes in appliances, e.g., in order to achieve higher energy efficiency of living and/or working spaces. Currently such a change is highly expensive for landlords due to massive lack of data. Such data is currently limited to building data and so far based on historical data, which is changed dure to climate change, and did not include the personal data of tenants in general due to GDPR and EU AI Act,

The existing solutions are mostly based on an automation which may refer to a model by which a central control solution is provided in identical form to multiple living and/or working spaces, irrespective of the occupants' needs and habits. One for all solutions such as sensor-based smart home solutions or Generative pre-trained transformer, GPT, or large language model, LLM, artificial intelligence, AI, solutions, need to collect the collective data of all potentials users to be able to react to any event.

### SUMMARY OF SOME EXEMPLARY EMBODIMENTS

It has been recognized that currently, the most promising solutions are based on AI methods. Yet, any AI method can only provide solutions as good and complete as the data it has access to. It has further been recognized that, in particular EU-wide, it is not allowed to send detailed personal data into cloud solutions and therefore, cloud-based AI solutions are currently limited to work on general building data only.

It has thus been recognized that the market is generally missing an economical and ecological solution for control of building actors, based on accurate, real-time and predictive personal data and building data. Such a solution may benefits not only occupants but also landlords and society as a whole by adapting control of living and/or working spaces to individual needs of users (e.g., occupants). Ideally, a solution will be configured as one solution per user, e.g., a personalized control approach per occupant.

It has been recognized that there exists a need for minimum-effort management systems for one or more living or working units which free an occupant of one or more living or working unit of the burden to themselves program management functionalities. It has further been recognized that a management of one or more living or working unit can only be satisfactory for a given occupant when it is tailored to the individual way in which the occupant uses the one or more living or working unit. Building management tailored to the occupant's needs, behaviors and/or habits may be termed human-centric. It has yet further been recognized that an individual usage pattern of one or more living or working unit (e.g., behavior) of any given occupant, while essential pre-requisite for a human-centric home management solution, corresponds to personal data which needs to be protected from unauthorized access. In some countries, there may even be legal requirements such as the General Data Protection Regulation, GDPR, in the European Union which require any provider of technological services to keep personal data of clients private.

It is thus inter alia an object of the present disclosure to enable human-centric building management solutions while protecting personal information of the client.

According to a first example aspect, a method is disclosed (e.g., performed and/or controlled by a first apparatus, e.g. an edge device, e.g., called "Vibe") comprising:
- accessing (e.g., exchanging data with) at least one removable storage element for storing personal occupant data by means of an access means (e.g., being part of the first apparatus), wherein the access means comprise a receptacle configured to removably hold the storage element (e.g., storage card) and to access the storage element in a wired way, wherein the personal occupant data comprises (e.g., behavioral) information regarding (e.g., at least one behavior of) at least one resident of one or more living or working unit, wherein the access means are protected by at least one security layer means (e.g., part of the apparatus; e.g., software) configured to prevent unauthorized access to the personal resident data stored by the at least one storage element;
- The first apparatus activates only if such removable storage element is inserted by a registered user. (Only such elements owned by registered user (such as tenant) )
- locally processing of at least parts of the personal occupant data; and
- controlling at least one actor of the one or more living or working unit based on the local processing.

The method according to the first example aspect may for instance be performed and/or controlled by a first apparatus (e.g., according to the first example aspect). The first apparatus may for instance comprise means for performing and/or controlling the actions as specified by the method according to the first example aspect. For instance, the first apparatus may comprise at least one processor for executing computer program code for performing the actions, at least one memory storing the program code, or both. Alternatively, the first apparatus may comprise for instance circuitry that is designed to implement the actions, for instance implemented in a chipset or a chip, like an integrated circuit. In general, the apparatus and in particular the means may comprise for instance one or more processing means or processors.

The first apparatus may for instance correspond to at least one of a laptop, a microprocessor, a wireless routers, a set-top box, a television device, a mobile phone, a tablet, a Raspberry Pi, an internet of things, IoT, device, an industrial IoT, IIoT, device and/or combinations thereof. The method according to the first aspect may in particular be platform/hardware-agnostic (e.g., except for a requirement of an access means as specified above).

The first apparatus may for instance be positioned inside the one or more living or working unit (e.g., and/or a building).

For instance, the one or more living or working unit may correspond to at least one of, a room (e.g., within a house and/or an apartment and/or an office), an apartment (e.g., in a multi-apartment house), a house, an office (e.g., an entire or a part of an office building, one or more rooms within an office building, a room within an apartment designated as a home-office room, and/or combinations thereof), a restaurant (e.g., an entire restaurant, a part of a restaurant, a kitchen of a restaurant, a part of or an entire serving area of a restaurant and/or combinations thereof) a store, a hospital (e.g., a given room within a hospital, another part of the hospital), a school (e.g., a hall within a school, a classroom, a teachers' room and/or combinations thereof), and/or combinations thereof. The one or more living or working unit may for instance correspond to a section of a room, for instance a cubicle, a seating area, an entrance, a bar and/or a kitchen. A respective living or working unit may be (e.g., configured to be) used exclusively for either working or living or may additionally or alternatively be used for both living and working.

An occupant of the one or more living or working unit may for instance be a human person. An occupant may in particular refer to a human being. The occupant may live in or (e.g., regularly, e.g., daily, e.g., on certain days (e.g., of the week)) frequent the one or more living or working unit, e.g., a tenant of a rented one or more living or working unit or a proprietor living in their one or more living or working unit. The occupant of one or more living or working unit may for instance regularly and/or mainly use a certain one or more living or working unit. For instance, an occupant may comprise an office worker using a certain office, a chef using a certain kitchen and/or working in a certain restaurant.

More than one occupant may utilize a given one or more living or working unit.

Sensor information about the one or more living or working unit may be used to generate conclusions about the one or more occupants. As personal data needs to be protected, collecting it which may violate privacy regulations. The occupant, as defined here, may for instance have a right to decide about at least one ambient condition ("vibes") of the one or more living or working unit. Vibes may comprise a (e.g., desired) temperature (e.g., such as making it warmer or colder), e.g. based on a need of the at least one occupant. The occupant may have a right to manage a certain living area as needed, but may additionally be restricted. For example, a building owner may have a right to define that a tenant may not set the temperature any warmer than 25 degree Celsius.

The first apparatus may be displayless and/or free of any user interface and/or optionally offer a related app (e.g., for a smart phone), e.g., by means of which a user of the app (e.g., the occupant and/or a landlord, a reseller, a tenant and/or a home owner) can access information and/or send commands. The first apparatus (e.g., performing and/or controlling the method according to the first example aspect) may for instance be termed a Virtual Intuitive Butler für Energy (Vibe).

The first apparatus according to the first example aspect comprises access means. The access means may for instance be configured to communicatively connect with the storage element. The access means may provide at least one of or both of a read access and a write access. The access means may be configured to access (e.g., read from and/or write to) the storage element in a wired way, e.g., without any wireless communication link involved.

The access means may comprise a receptacle configured to removably hold a storage element. For instance, the receptacle may comprise wired contacts in a socket according to a communication interface, for instance an SD card communication protocol, an USB protocol, a Firewire protocol, Message Queuing Telemetry Transport, MQTT, or a Thunderbolt protocol or combinations thereof.

Additionally, or alternatively, the receptacle may be configured to mechanical hold a storage element (e.g., not only establish a communication connection to the storage element but physically hold the storage element). For instance, the receptacle may be formed as a USB-socket for mechanically holding a USB-storage (e.g., a USB-stick). For instance, the receptacle may be formed to mechanically hold a storage card (e.g., a Flash storage card, e.g., an SD card).

The storage element may be configured to removably hold the storage element. For instance, a user of the first apparatus (e.g., an occupant) may be able to insert or remove the storage element from the access means, in particular from the receptacle of the access means. The occupant may thus have control over data stored on the removably held storage element at any time. The occupant may for instance take all their personal occupant information with them when they move out of the one or more living or working unit and may, if a similar device (e.g., first apparatus, e.g., Vibe) is available at a new location, plug his storage element in and profit from personalized building management straight away with minimal to no training.

Often, the owner of the building differs from a user of one or more living or working unit, such as for instance a landlord on the one side and a tenant on the other side. These different parties need access to different data and/or may have different rights (e.g., in setting vibes or the one or more living or working unit). The landlord may for instance be the (e.g., only) instance to allow, own and/or install an apparatus according to the first example aspect (e.g., "Vibe"), in his/her own building, regardless of occupants living there at a time.

The occupant (e.g., resident or tenant) may be the only instance who can allow installation and storage of his/her personal data. Therefore, the owner may buy and install the apparatus with the tenant's permission, but the device may not function without a removable storage element (e.g., memory card), which may for instance be provided to tenant only (e.g., not to the landlord). The removable storage element (e.g., memory card) is not owned by landlord and the apparatus according to the first example aspect (e.g., Vibe) is not fully functional without the removable storage element (e.g., memory card). For instance, an LED light on the apparatus according to the first example aspect (e.g., Vibe) may indicate whether or not the apparatus is in a functional state, in particular whether a suitable removable storage element is present or missing. An apparatus according to the first example aspect, (e.g., Vibe) may be configured to store data (e.g., including personal data) and/or to control at least one device (e.g., actor of the one or more living or working unit), e.g., a smart thermostat, in particular locally and/or in autarky, only if the removable storage element (e.g., memory card) activates the device.

The removably held storage element may be configured to store personal data of the occupant. For instance, the method may comprise (e.g., the first apparatus may be configured to) storing (e.g., any) personal information about the occupant on the removably held storage element. For instance, the personal data may comprise behavioral data, for instance information about (e.g., energy and/or appliance-related) usage patterns of an occupant of a given one or more living or working unit. Additionally, or alternatively, the personal occupant data may correspond to a occupant behavior (e.g., presence, absence, movement pattern, wake-sleep pattern, showering rhythms and/or times), an occupant preference (e.g., temperature preferences, airing/ventilation preferences, light preferences) and/or a (e.g., past) occupant control actions (e.g., thermostat adjustment, light switching, window opening and/or closing).

The access means are protected by at least one security layer means. The security layer means are configured to prevent unauthorized access to data stored on the removably held storage element, in particular to personal data of an occupant of one or more living or working unit stored o the storage element. The security layer means may be provided by the first apparatus. For instance, the security layer means are implemented in software. For instance, the security layer may be configured to limit access to the storage element to authorized (e.g., virtual) entities such as predefined (e.g., authorized and/or certified) user groups and/or predefined (e.g., authorized and/or certified) software-modules (e.g., applications running on the first device).

Personal occupant data stored on the storage element may relate to a single occupant or to multiple occupants in one or more living or working unit. Personal occupant data may differentiated by occupants or may be stored without resolving into individual occupants. According to an embodiment, the apparatus may comprise more than one access means for respective storage means wherein personal recipient data of a respective occupant is stored on a respective storage element, e.g., separately from personal occupant data of other recipients.

The method further comprises a local processing of at least parts of the personal occupant data stored on the storage element. For instance, the personal occupant data may to this end be stored in a volatile memory of the apparatus, in particular not on a non-volatile memory of the apparatus. For instance, a local processing may involve applying at least one function to at least a part of the personal data by means of a processing means such as a processor of the first apparatus. In particular, a local processing is performed independently of (e.g., without communication with) any remote apparatus, for instance of a server, outside of the living unit such as in cloud. In particular, a local processing is performed independently (e.g., in autarky) of any device other than the apparatus (e.g., and other than the storage element).

An outage of internet, a loss of a connection with internet and/or issues with bandwidth fluctuances and similar problems do not affect the functionality of the first apparatus (e.g., Vibe). Thereby, a reliable management of critical infrastructures in one or more living or working units is ensured. Optionally, the first apparatus (e.g., Vibe) may be connected to a bus system, a battery and/or combinations thereof in order to ensure reliability of the apparatus, e.g., even in case of a power outage. The first apparatus may for instance be configured to recognize at least one or more of the above issues and may for instance update at least one central server asynchronously at a later time, when an internet connection is restored. Thereby, no data is lost by a loss of internet connection.

The local processing may for instance perform at least one prediction of an occupant behavior, an occupant preference and/or an occupant control action.

By locally processing the personal occupant data, the personal occupant data can stay within the apparatus, i.e., local, and does not need to be transferred to another technical entity, such as, for instance a server, e.g. of a cloud service. The local processing thus ensures that the personal occupant data stays protected from access by any other entity than the first apparatus. In addition, the personal occupant data may be aggregated, over time, and encrypted and be sent to the server, for better building management, in a way that the data cannot be dissolved or re-engineered or combined with social media data to find out any information about the human being to which the personal occupant data belongs.

The method further comprises controlling at least one actor or monitoring or analyzing the status of at least one sensor of the one or more living or working unit based on the local processing. The actor may for instance (e.g., be configured to) enable the first apparatus to influence at least one state of a technical appliance of the one or more living or working unit. The actor may for instance belong to at least one technical appliance of the one or more living or working unit, for instance, to a heating appliance, a cooling appliance (e.g., air conditioning), an air filter appliance, a ventilation appliance, a lighting appliance, a kitchen appliance, charging stations, renewable sources, restrict heat, define consumption in combination with smart meters, e.g. smart meter gateways (SMGW) to optimize the networks or decide bases on tariffs to optimize costs and/or combinations thereof. An actor may for instance comprise a switch, a thermostat, a dimmer, a digital control interface such as a communication interface to at least one appliance (e.g., via a home management application programming interface, API, of an appliance), and/or combinations thereof. The method may enable a management of living or working units based on decentral collaborative AI methods called federated learning.

By basing the control of at least one actor on the local processing, personal occupant data may be analyzed locally and used for building management, including known methods such as smart home, HEMS (Home energy managmenet systems), BEMS (building energy management system) security sevices of all kind and more.. The method and/or apparatus according to the first example aspect thus achieves a personalized (e.g., human-centric) management of one or more living or working unit while keeping personal information within the ownership of the occupant (e.g., by storing it on a removable storage element) and while restricting access to authorized parties and technical entities (e.g., by the security layer means).

Additionally or alternatively to controlling at least one actor, the method may comprise monitoring at least one sensor (e.g., sensor output) (e.g., a window sensor informative of whether the window is open or closed), in particular based on the local processing. For instance, the local processing may be used to monitor whether data reported by at least one sensor is plausible (e.g., expected) or not. For instance, the local processing may predict an expected sensor data of at least one sensor and subsequently compare the predicted data with the data reported by the sensor. If there is a mismatch between sensed and predicted data, an alarm may be caused. For instance, the local processing may be informative of a current occupancy scheme of the occupant, for instance, an absence over a prolonged period of time (e.g., vacation). The monitoring of at least one sensor may not match (e.g., an expectation based on) the occupancy scheme. For instance, sensor data may indicate an open window or a consumption of at least one appliance such as a kitchen appliance above stand-by consumption. As such sensor data may not match the expectation based on local processing, the monitoring may detect an anomaly and/or may cause an alarm.

The first method may additionally or alternatively comprise causing an alarm based on the local processing and/or based on monitoring at least one sensor. The alarm may be emitted and/or caused via a server (e.g., via a cloud service), e.g., wherein the alarm is directed to a mobile device of the occupant and/or another entity such as for instance a landlord of a respective one or more living or working unit or alternatively, to a third entity such as for instance a fire department and/or a security service.

As the number of digital devices grows, their complexity grows a faster (e.g., exponentially with a number of digital devices). To make building management easy and smooth for everyone (e.g., despite growing complexity) it is proposed to use decentral on-edge (e.g., performed on the first apparatus) artificial intelligence, AI, solutions. Consequently, the first apparatus, e.g., Vibe, is enabled learn as a local-self-learner and, e.g., manage the one or more living or working unit for the occupants. Local processing reduces (e.g., eliminates) complexity for occupants and does not rely on receiving settings, e.g., via a smartphone app.

According to an embodiment of the first example aspect, the method further comprises:
- controlling of a virtually connected group of similar actors as a whole based on a collective behavior of multiple similar occupants (e.g., such as managing more than one heater-radiators to manage a central heater connected the heater-radiators).

According to an embodiment of the first example aspect, a decentral collaborative artificial intelligence, AI, method, e.g., such as federated learning may be applied. For instance, thereby at least one or more AI algorithm and/or methods may be provided (e.g., transmitted, sent, and/or downloaded) to one or more first devices (e.g., called edge devices), e.g., Vibe. A given AI algorithm and/or method may be termed Vapp, i.e., an external AI application for Vibes. A respective Vapp may comprise and/or fulfil at least one or more functionality, e.g., as allowed on the first apparatus (e.g., Vibe). For instance, a given type of Vapp (e.g., active on more than one first apparatus) may collaboratively learn from one another other via a server, such as a cloud server, e.g., without sending any personal occupant data (e.g., but a respective configuration, e.g., weights, of an AI model of the respective Vapp instance of a respective first apparatus). It is thus inter alia proposed to collectively share so called "weights", e.g., synapse weights between artificial neurons of an AI model, and keep the personal occupant data local. A given Vapp may thus learn and train locally and other Vapps (e.g., on other first apparatus) are enabled to learn form the "learnings" of the given Vapp.

According to an embodiment of the first example aspect,
- the locally processing comprises locally adjusting (e.g., training) a configuration (e.g., weights) of at least one of at least one (e.g., a first contaminated) local machine learning model (e.g., executed on the device) using at least the personal occupant data and/or
- the processing comprises predicting at least one behavior (e.g., presence; e.g., by room; e.g., heating temperature) of at least one occupant based on a locally adjusted configuration of the local machine learning model, in particular wherein the controlling at least one actor of the one or more living or working unit is based on at least one of the at least one predicted behavior.

The local processing may comprise locally adjusting a configuration of a local machine learning model. The local machine learning model be local in that it is executed on the first apparatus and e.g., independently from other apparatuses.

A machine learning model may for instance correspond to a supervised machine learning model, for instance to at least one of a support vector machine, a logistic regression model, a decision tree, or a neural network, for instance a deep neural network. A machine learning model may comprise and/or correspond to at least one of (1) a communication model (e.g., the federated learning framework Flower), (2) a local (e.g., on-edge) machine learning model training method (e.g., by using Pytorch, Tensorlite and/or combinations thereof), or (3) at least one overall machine learning architecture (e.g., a Long Short Term Memory, LSTM, model, a Markovian Language Network, MLN, a framework such as TinyML and/or combinations thereof). Additionally, hybrid models combining more than one single technology may be implemented

The first apparatus (e.g., Vibe) may be configured to use at least one or more (e.g., mutually different) types of machine learning, ML, algorithms. Such ML algorithms may in for instance comprise at least one of a supervised learning algorithm, e.g., a Long-Short Term Memory, LSTM,a Recurrent Neural Networks, RNNs, an eXtreme Gradient Boosting, XGBoost, a decision tree, DT, a decision forest, a linear regression, or a seasonal autoregressive integrated moving average, SARIMA. Such ML algorithms may in for instance additionally or alternatively, at least one unsupervised learning algorithm, e.g., K-means clustering. MA. Such ML algorithms may in for instance additionally or alternatively, comprise at least one hybrid algorithm, wherein a hybrid algorithm may for instance correspond to a combination of the above-mentioned algorithms.

Adjusting a configuration of the machine learning model may for instance correspond to training the machine learning model on single first apparatus (e.g., Vibe) (e.g., there may be one or more Vibes in one living or working units, e.g., wherein the multiple first apparatus are virtually connected, e.g., within a building (e.g., yielding a smart building), a smart quartier and/or a smart city). For instance, by training, the machine learning model may form associations between, e.g., measurements (e.g., from a sensor in the building and/or one or more living or working unit) and/or circumstantial factors such as e.g., an age and/or sex of the occupant, a current season, a day of the week, a day time and/or an outside temperature, and a past occupant behavior and/or control action and at least one or more (e.g., all) habits of an occupant. For instance, if an occupant repeatedly performed a given control action at a certain time during working days (e.g., return home by 6 pm and ventilate the one or more living or working unit), a training may be able to form an association between the day of the week (e.g., working day), and a time of the day (e.g., 6 pm) and a control action (e.g., a ventilation, or reservation of a parking slot) performed by the occupant.

In case the machine learning model comprises a neural network, the configuration of the machine learning model may correspond to a set of weights between virtual neurons.

The configuration (e.g., weights) of the machine learning model may be formed by training based on personal occupant data and/or characteristics of at least one or more actors in a living or working unit. For instance, a gas and oil heater react differently than a heat pump but the personal occupant data may not be retrievable from the trained configuration. For instance, the degrees of freedom of the local machine learning model may be set to a degree that prevents overfitting to (e.g., single) occupant behaviors and may force the machine learning model to generalize sufficiently so that no personal occupant data may be retrieved from the configuration. Additionally or alternatively, a machine learning model which has been trained on personal occupant data may be referred to as a "contaminated" model (and/or as a contaminated configuration) because the model and/or configuration has been trained to reflect user preferences, actions, behaviors and/or further personal data such as a sex, age and/or family situation of an occupant. A contaminated machine learning model and/or configuration may need to be protected from unauthorized access. E.g., a contaminated configuration may be stored on the storage element just like the personal data itself and/or may be stored on volatile memory within the apparatus only (e.g., not on non-volatile memory).

Not only the sensor data is called personal occupant data, such as for instance data gathered by means of a presence sensor, but also any kind of data obtained through analysis of sensor data and/or aggregated data which may for instance be created via raw (e.g., sensor) data, and may be usable to extract information regarding the personal identity of the occupants. As such data may partially be needed for example to manage at least one appliance, e.g., a central heater, and/or may at some stage be required by law, personal data may for instance comprise such data which is protected (e.g., prohibited from being freely shared) by a law of a country (e.g., in which the one or more living or working unit is located), e.g., acknowledged by a respective building owner and/or signed and agreed by the occupant. A service provider (e.g., of a Vapp and/or a learning step) may be prohibited from using the personal occupant data for commercial needs. Therefore, the type of data considered as personal occupant data may differ between two different first apparatus and/or two different living or working units. The local AI (e.g., the first apparatus) may be configured to (e.g., informed) (e.g., at a time of installation and/or from a beginning), for example based on a catalogue signed by landlord and an occupant (e.g., tenant), which data is to be treated as personal occupant data and which data is to be treated as general building data (e.g., such as data for energy bills, mold or other alarms). There are two different optional Apps for tenants and owners with respectively different information and rights.

Once the configuration of at least one local machine learning model has been adjusted (i.e., the machine learning model has been trained), the respective machine learning model may be used to predict future occupant behavior and/or control actions and/or preferences. For instance, the trained machine learning model may be used to predict a presence or an absence of an occupant, a wakeup-time of an occupant, a showering, a ventilation, (e.g., a certain temperature setting of) a heating and/or cooling and/or combinations thereof. In particular, personal occupant data (e.g., of past occupant behaviors, e.g., captured by a sensor) may be used as an input to the trained machine learning model in order to predict a future and/or current occupant behavior and/or preference and/or control action.

Such predictions may be used to automate the one or more living or working unit, e.g., by controlling at least one actor and/or monitoring of at least one actor of the one or more living or working unit based on a predicted occupant behavior, control action and/or preference. For instance, if the trained machine learning model predicts the control action of a window opening at 6 pm, the method may comprise, based on this prediction, controlling a ventilation actor to ventilate sufficient but not at full demand (such as 20 degrees in living room), because it is known that energy may get lost at 6pm before the occupant is predicted to be home, but not at 6 but later or earlier. The first device may be configured to (e.g., by means of or based on the local processing) to take at least one decision based on sensor data and/or what happens and, e.g., not based on a calendar and/or on repeating processes. Then heat up the heaters to keep a certain minimum of room temperature and scales up the heaters accordingly in all rooms to achieve required temperatures at tenant decisions, such as 18 in bedroom and 20 in living room. It is quite a complex process to have all learned all heat curves in each room and their dependencies, as well as outdoor temperature and weather forecasts to ensure a smooth and efficient heat management by simple opening of windows, whereby all dynamic decisions are analyzed locally and independent of any external server or internet connectivity.

According to an embodiment of the first example aspect, the local processing and/or the controlling at least one actor (330) comprises determining at least one starting time (e.g., based on an estimated time of arrival of an occupant) for at least one actor (e.g., a heating, in particular heating radiator and/or thermostat, an air conditioning, an air filter, a boiler and/or combinations thereof), in particular based on an efficiency (e.g., and/or efficacy; e.g., in influencing at least one ambient parameter of the one or more living or working unit) of the at least one actor (e.g., wherein the efficiency and/or efficacy is pre-defined and/or has been learned, e.g., by at least one machine learning module, e.g., of the first apparatus, e.g., using a federated learning approach, e.g., in cooperation with at least one remote apparatus). The starting time may for instance further be based on at least one property of the living or working unit, e.g., an isolation property and/or a neighboring unit, e.g., wherein the property is pre-defined and/or learned (e.g., in the same of similar way to the efficiency and/or efficacy of the at least one actor).

For instance, the local processing and/or the controlling and/or controlling may comprise determining at least one starting time for at least one appliance. For instance, an actor such as a heater (e.g., heating radiator, e.g., by means of a thermostat) may be switched on or off or set to a desired temperature at the determined starting time. For instance, by determining a starting time, the method may enable a pro-active management of the one or more living or working units. For instance, a starting time may be set depending on a known (e.g., learned) efficiency of a particular apparatus in influencing at least one ambient parameter (e.g., temperature) of the one or more living or working units, e.g., and may further be based e.g., a desired (e.g., learned) point in time when a certain state of the influenced ambient parameter (e.g., a certain temperature, e.g., in a certain area) is to be reached.

By (e.g., proactively) controlling at least one actor based on timing (e.g., a starting time), an appliance (e.g., a radiator) may be used for a prolonged period of time (e.g., may be launched before an occupant enters an area and/or a living or working unit in which an ambient parameter it so be adjusted) compared to a manual control or to a home automation. As the apparatus may know when an occupant is going to arrive in a given living or working unit, it may achieve a desired ambient parameter (e.g., temperature) using less powerful appliances, by increasing a time during which the appliance is active (e.g., before the occupant arrives). The appliance may pre-influence (e.g., pre-heat) the living or working unit, e.g., according a known (e.g., learned) room specifics (e.g., size, volume, heat transfer to outside, isolation characteristics), a (e.g., learned) demand (e.g., any respective room may be different and/or may influence other rooms) and/or according to a (e.g., learned) efficiency of the respective appliance. As an effect, the living or working unit is conditioned (e.g., at least one ambient parameter is influenced to a desired state) in good time before an (e.g., predicted) arrival of the occupant.

According to an embodiment of the first example aspect, the method further comprises:
- by means of at least one sensor interface (e.g., wireless or wired, e.g., a wireless local communication standard, e.g., WLAN, Bluetooth, Zigbee, KNX or other bus systems) (e.g., secure,; e.g., by at least one step of authentication, encryption and/or identification; e.g., based on a serial number of a given sensor; e.g., protected by a protocol such as WLAN, Bluetooth or Zigbee), communicatively connecting to at least one sensor (e.g., presence sensor, temperature sensor, brightness sensor), in particular wherein the apparatus is configured to store (e.g., personal occupant) data captured by the sensor locally on the storage element; and/or
- by means of at least one actor interface (e.g., wireless or wired, e.g., a wireless local communication standard, e.g., WLAN, Bluetooth, Zigbee) (e.g., secure,; e.g., by at least one step of authentication, encryption and/or identification; e.g., based on a serial number of a given actor; e.g., protected by a protocol such as WLAN, Bluetooth or Zigbee) connecting to the at least one actor (e.g., heating device, cooling device, and/or air filter).

The method may comprise communicatively connecting to at least one sensor. For instance, a sensor interface may be used for such connection, in particular a wired or wireless interface.

For instance, a wireless local communication technology may be used for a wireless interface. A wireless local communication technology may for instance be one of such as Bluetooth, Zigbee, and/or WLAN. The Bluetooth specifications are currently available on the Internet at www.bluetooth.org. WLAN is standardized in the standards of the IEEE 802.11 family, which are currently available on the Internet at https://www.ieee.org. A wireless communication technology may in particular not comprise a mobile radio communication system such as a 2G/3G/4G/5G/6G communication system. The specifications for 2G, 3G, 4G, 5G or 6G mobile communication systems are currently being developed by the 3rd Generation Partnership Project (3GPP) and can be found on the Internet at https://www.3gpp.org/.

A communication with sensors may be implemented by means of the Message Queueing Telemetry Transport (MQTT) protocol which is particularly suited for insecure networks.

A single sensor interface may be used for (e.g., all) multiple sensors in communication with the first apparatus. Alternatively, at least two sensors may be connected through different sensor interfaces.

At least one sensor may for instance correspond to an IoT, IIoT and/or AIoT sensor.

The sensor interface may be secured. For instance, the sensor interface may require at least one step of an authentication, encryption and/or identification. For instance, the sensor interface may only allow access to sensor data if a requesting entity such as a user or an application on the first apparatus is able to provide proof of its identity (e.g., by an encryption certificate). Additionally or alternatively, the sensor interface may implement an encryption of sensor data. For instance, a communication signal from a sensor to the first apparatus may be protected by measures of the respective communication technology, such as e.g., the Zigbee protocol. A given Zigbee node may be unique and any communication exchanged with the node is encrypted. The data received from the node may thus be considered authentic.

A sensor may for instance comprise a presence sensor (e.g., capturing whether an occupant is present, e.g., within a certain room of the one or more living or working unit (e.g. of a building) or in the one or more living or working unit (e.g., building) in general), a temperature sensor (e.g., per room), a brightness sensor, a gas sensor (e.g., measuring air quality), a tracking device or functionality of controls of at least one appliance (e.g., a reporting functionality of an appliance informative of, e.g., a thermostat or a switch).

Other than simple raw sensor data, the first apparatus (e.g., Vibe) may save qualified sensor data, by combining at least two or more sources of data for at least one conclusion. This may enable the method to eliminate issues with sensor failures and generate maintenance alarms. For example, a temperature data can be double checked with weather forecasts, or a presence sensor can be checked with motion sensors. In addition, the local AI may start checking probabilities of a certain condition based on historical data and/or expected predictive data.

According an embodiment of the method according to the first example aspect, the machine learning model (e.g., AI) may not only react to sensor data but may also act proactively. Other than typical automation services, where wrong actions may be caused by wrong sensor data, the AI may send alarms based on wrong sensor data and still perform a correct prediction (e.g., a prediction of a correct value).

Personal occupant data (e.g., sensor data and/or aggregated data or analytics and/or combinations thereof.) captured by at least one of the sensors connected through a sensor interface may be stored on the storage element. By this, the occupant stays in control over their data and the access to such data is protected by the security layer means.

Analogously to connecting to a sensor through the sensor interface, the method may comprise connecting to an actor through an actor interface. For instance, the sensor and actor interfaces may use similar or identical communication technologies.

An actor may for instance comprise and/or be configured to control at least one function of a heating device, a cooling device, a ventilation device (e.g., window-opener and/or closer, and/or fan), an air filter, a lighting, a kitchen appliance and/or combinations thereof.

Actors and sensors may overlap in certain instances, for instance, a control unit of an appliance (e.g., ventilation) may be configured to report its current setting to the first apparatus any may thus fulfil a function of a sensor which captures a current setting. At the same time, the control unit may receive commands from the first apparatus and thus may act as an actor.

According to an embodiment of the first example aspect,
- the at least one security layer means comprises at least one of
   - an encryption and decryption module (e.g., software) to write and access encrypted data stored on the at least one storage element (e.g., to counteract manipulation by an occupant), or
   - a gating module (e.g., software) that restricts (e.g., read and/or write) access to the at least one storage element to authorized and/or local (e.g., running on the apparatus) applications (e.g., Vapps; e.g., closed system).

The security layer means may comprise an encryption and decryption module. For instance, data on the storage element may be encrypted. This has the advantage that the occupant (e.g., a renting tenant) may not be able to manipulate the data stored on the storage element and/or that no entity can easily read out the personal occupant information on the storage element, even after removing it from the first apparatus. For instance, a symmetrical encryption method such as Advanced Encryption Standard, AES, Data Encryption Standard, DES, Triple DES, TDES, Twofish and/or combinations may be used for encryption and decryption. Additionally or alternatively, an asymmetric encryption may be used. A respective key may be stored in the first device at a secure location with restricted access and/or in a read-only location.

The owner (e.g., landlord) registers a device for an occupant (e.g., tenant). Therefore, storage element may not activate other Vibes. By change of status (e.g., a tenant moves to a new place), the owner must de-register the Vibe regarding the date, where the usage right of a specific occupant (e.g., tenant) ends. In such a case, the cloud services (v-cloud) terminate the usage rights at the specific date. By that, it may take for example an encrypted image copy of that Vibe and then reset the Vibe to the original factory status. Once the user moves to a new place, with a new Vibe, the owner must register that Vibe for a user who has already a storage element. Now the v-cloud finds the related information and copies the images to the new Vibe device. Now the passwords all match and device recognize the storage card with the user history. Then re-trains only based on new equipments, size and other characteristics. But the user data will be reused so that it quickly adjusts the user needs again. The user may also require to stop the service for ever. In that case, we reset the Vibe only and do not copy an image. In summary, the eco system adjust the new Vibe to the existing user rather any change of password on the storage element.

An allocation of keys may be organized in a way that an installation entity (e.g., an owners and/or a landlord) installs a device, e.g., a first apparatus (e.g., Vibe) , e.g., in a rental living or working unit. The installation entity (e.g., landlord) may register the occupant (e.g., tenant) in a separate tool and may further inform that is the first apparatus is installed in a living or working unit, used by a certain occupant. The removable storage element, e.g., storage card, may include an occupant key by shipment to that tenant. A storage card may activate only a certain Vibe in a certain living unit only. In other words, a permission for usage of anything in a living unit is decided by owner, but the permission for a functionality of the Vibe in the living or working unit may be decided by the occupant (e.g., tenant). If the tenant moves, a new installation entity (e.g., owner of a living or working unit to which the occupant moves) can register the occupant (e.g., tenant) again. A central service (e.g., certification authority) may then allocate a new device key to the existing storage/tenant key.

The security layer may additionally or alternatively comprise a gating module which restricts access to the at least one storage element. For instance, only authorized and/or local software modules (e.g., machine learning modules), and/or applications (Vapps) may be allowed to access the storage element. Other Vapps may ask the security level to receive required data from storage. For instance, the respective software modules and/or applications (Vapps) may have been obtained from a trusted source, e.g., preinstalled on the first apparatus or obtained from an authenticated source such as a trusted application platform. The method and/or the first device may in particular prevent an installation of any software on the first apparatus by a third party, e.g., by an occupant, a landlord or any other party. There may be provided a closed system in which only the service provider of the first apparatus (e.g., an entity which provides a configured first apparatus, e.g., an apparatus configured to perform and/or control the method according to the first aspect) is allowed to issue certificates of authenticity to software modules and/or applications running on the first apparatus. For instance, a first device may be configured to verify a module and/or an application, e.g., based on a public key of a software provisioning entity such as a server. For instance, the public key may be unalterably embedded into the first apparatus.

The access to the storage element may further be restricted to locally executed applications (Vapps), for instance wherein the locally executed application have to be run entirely on the first apparatus and not externally and/or wherein locally executed applications have no capability of forwarding data to an entity outside the first apparatus. For instance, access to communication interfaces of the first apparatus, e.g., to exchange data with other devices and/or to connect to the internet, may be restricted. E.g., a module and/or an applications may be restricted in whether they are allowed to transfer data and/or may be restricted to transmit only certain data, e.g., only adjusted configurations of machine learning models, yet no other data.

An application may for instance implement a certain functionality and/or provide a certain service to an occupant. An example of such a service may be a Home Energy Management System, HEMS. A HEMS may monitor and/or control at least one of energy generation, energy storage or energy usage in the one or more living or working unit. A HEMS may be pre-set and/or configurable to at least one of reduce costs, maximize self-sufficiency and/or minimize emissions. A HEMS may be empowered by one or more artificial intelligence modules (e.g., used by Vapps) e.g. a machine learning module or collective usage of ML of the first aspect, to become an AI HEMS. An AI HEMS may provide a digital system that at least one of monitors, predictively controls or adaptively adjusts at least one actor or monitors at least one sensor of a one or more living or working unit to a behavior and/or preference of an occupant. The behavior may be related to at least one of energy generation, energy storage or energy usage in the one or more living or working unit. The (AI) HEMS may be run on a first apparatus according to the first example aspect. Such AI HEMS can be connected to smart meters, or smart meter gateways (SMGW), e.g., via a certified component, e.g., called CLS component, to have access to network requirements and real time tariffs. That means such systems can act on external aspects such as weather and cost of electricity for the best of users.

Another application may for instance correspond to a Smart Meter Gateway, SMGW or for open source communities such as Home Assistant. The SMGW or devices form such open source communities may act as a central communication unit of an intelligent metering system. For example, a SMGW Vapp or HomeAssistant Vapp can act as server between many local auteurs. For instance, such SMGW may be required to fulfil strict requirements regarding security. SMGW may for instance correspond to a variant developed in accordance with specifications of the German Federal Office for Information Security (BSI). A main task of a SMGW may be to secure at least one or all data transmission in an intelligent metering system. Data may be transmitted via power line, PLC. PCL may only provide low bandwidth and/or may not be suitable for large amounts of transmitted data. PCL may involve a security risk as a "shared medium". A party connected to the power grid may be able to intercept transmitted data of other participants connected to the same line. Encryption may counteract a read-out of data, yet risks remain that for instance, a decryption is possible later on stored recorded transmissions. The SMGW Vapp may for example receive at least one status signal form the network provider and act accordingly. For example, in case there is an increased demand in a time window between 16:00 and 18:00, (e.g., all) consumers should operate accordingly. Another possibility are rewards. The highest consumption reductions can be awarded by earning benefits of all kinds.

In addition such AI HEMS can also communicate in different protocols with different local digital devices by simply providing related Vapps per such device.

Communication means of the first apparatus may be configured to apply a SMGW. For instance, data may be pre-processed and/or suitably packaged before transmission in order to conform to SMGW. SMGW may be used to obtain information, e.g., general, impersonal information such as for instance tariffs (e.g., energy prices) and/or network requirements to the first apparatus and the first apparatus (e.g., using a machine learning mode) may optimize local energy usage of the one or more living or working unit.

According to an embodiment of the first example aspect,
- (e.g., means for local processing is configured to ensure that) the locally adjusted configuration of at least one of the at least one local machine learning model is free of personal data (e.g., personal information cannot be reconstructed based on the configuration).

According to an embodiment of the first example aspect, the at least one machine learning model comprises at least two (e.g., parts of a machine learning model and/or two separate) machine learning models per Vapp, whereby one or more Vapps may run on one Vibe, wherein
- a first contaminated configuration of a first of the at least two machine learning models is locally adjusted using at least parts of the personal occupant data (e.g., may still not be suited to extract occupant data) and
- a second clean configuration of the second of the at least two machine learning models is locally adjusted using general (e.g., impersonal; e.g., building) data (e.g., free of occupant data) (e.g., wherein general data is stored in the apparatus, e.g., in a memory different from the removable storage element).

While adjusted configurations may be free of personal data even though a machine learning model has been trained on personal occupant data, a further layer of protecting person occupant data may be to introduce separate machine learning models for personal data and for impersonal data.

As has been discussed above, a machine learning model may take personal data as an input such as for instance, sex, age, marital status, family status, and/or combinations thereof. A machine learning model may take information such as presences and absences, movement patterns, daily routines, preferences regarding, e.g. temperature, air quality, lighting and/or combinations thereof as an input. The latter may also comprise sensitive personal data. Additionally, a machine learning model may take into account impersonal data such as, e.g., information on current weather conditions, e.g., temperature, wind, precipitation, building (e.g., living or working unit) information, e.g., current and/or predicted heating of surrounding buildings (e.g., living or working units) (e.g., apartments), the current season, day of the week, vacations, time of the day and/or combinations thereof.

Separate machine learning models may be trained on personal data on the one hand and impersonal data on the other hand.

A first contaminated configuration and/or machine learning model may be trained using personal data. The contaminated configuration may not comprise extractable personal occupant information, yet, may still contain a residual risk of being informative of personal data. Suitable countermeasures (e.g., reduction of degrees of freedom of the machine learning model and thus forced generalization) may minimize such risk.

A second, clean configuration and/or machine learning model may be trained using impersonal data. The impersonal configuration may not betray any information about the occupant but may for instance instead encode how the one or more living or working unit reacts to the actions of actors, for instance depending on outside conditions (e.g., rain, wind, temperature outside), inside conditions (e.g., conditions in other connected one or more living or working units, e.g., apartments) and/or time-based factors (e.g., season, day of the week, time of the day).

The impersonal data (also referred to as general data) and/or the clean configuration may be stored inside the first apparatus, i.e., not on the removable storage element. In this way, the first apparatus may still access the clean configuration and the impersonal data when a occupant removes their storage element (e.g., when they move out).

Splitting clean and contaminated configurations and/or machine learning models has the added benefit, in addition to enhanced protection of personal occupant information, that the first apparatus may keep the learned behavior of the one or more living or working unit, even when the current occupant moves out. The method thus enables a quick adaption to new occupants. Only the contaminated configuration and/or machine learning model may need to be trained in this case. If the new occupant lived in a one or more living or working unit with a first apparatus according to the application, a re-learning may even be less (or, may be taken over essentially unaltered from a pre-learned contaminated configuration based on a previous one or more living or working unit, e.g., provided by the new occupant with his removable storage element).

According to an embodiment of the first example aspect, the method further comprises:
- communicating with at least one remote apparatus (e.g., server, cloud), wherein the communicating comprises
   - transmitting at least a part of the locally adjusted configuration of at least one of the at least one local machine learning model to at least one of the at least one remote apparatus (e.g., a first contaminated adjusted configuration to a first remote apparatus (e.g., for personal data) and a second clean adjusted configuration to a second remote apparatus (e.g., for general data)) and/or
   - obtaining at least a part of a remotely adjusted configuration (e.g., based at least partially on at least one locally adjusted configuration originating from a different apparatus) of the at least one of the at least one local machine learning model from the at least one remote apparatus (e.g., a first contaminated adjusted configuration from a first remote apparatus (e.g., for personal data) and a second clean adjusted configuration from a second remote apparatus (e.g., for general data)).

The method may be embedded into a distributed learning structure for human-centric building management. It has in particular been recognized, that locally-trained machine learning models, in particular the thereby obtained configurations, in particular weights of neural networks, may be shared with other technical entities (other than the first apparatus) without compromising protection of personal occupant data. Depending on the machine learning model, the adjusted configuration of the machine learning model may not be informative of personal data used to train it. Additionally or alternatively, the local training may be split into training on personal data (thus creating potentially contaminated adjusted configurations) and impersonal data (thus creating clean adjusted configuration). At least the latter may be exchanged with entities other than the first apparatus while keeping personal data safe.

It is thus proposed to transmit at least part of the locally adjusted configuration to at least one remote apparatus.

For instance, a locally adjusted configuration trained based, inter alia, on personal data may be transmitted to the remote apparatus. Alternatively, (e.g., only) a clean adjusted configuration may be shared with a remote apparatus. This may change based on country laws and requirements for certain applications.

Additionally or alternatively, a contaminated adjusted configuration may be transmitted to a first remote apparatus, while a clean adjusted configuration may be transmitted to a second remote apparatus, different from the first remote apparatus. In particular the first remote apparatus may be required to conform to certain requirements, for instance may be required to be positioned inside a geographical region, e.g., inside the EU, and/or may be required to restrict access to a small number of people, e.g., less than 1000, 100, or 10, and/or may be required to encrypt all data and perform an encrypted processing of the contaminated adjusted configurations and/or may be required to delete the received contaminated adjusted configurations after processing it.

For instance, a remote apparatus, e.g., the first and/or second, e.g. a server, may be configured to perform a joint training on adjusted configurations from at least two or more first apparatuses. Such learning may be termed Federated Learning, FL. While the adjusted configurations are obtained through local training on so called edge devices (e.g., the first apparatus according to the first aspect), the adjusted configurations from multiple such edge devices may be combined in a remote apparatus (e.g., server). The remote apparatus does not have access to the training data (e.g., be it general, impersonal data or personal data), but (e.g., only) to the adjusted configurations. By combining configurations from multiple devices, the learning of the edge devices may be accelerated compared to a purely local learning the adjusted configurations. At the same time, no personal data needs to be shared with a remote apparatus. Personal occupant data may be defined as (e.g., any) sensor data, aggregated data and/or analytics and/or combinations thereof, which may refer to an original occupant. Such definition may differ from country to country and by different application and the fact if owner and user are the same or not.

The first remote apparatus may for instance perform a joint training on the contaminated adjusted configurations obtained from the first apparatus. The second remote apparatus may for instance perform a joint training on the clean adjusted configurations obtained from the second apparatus.

The method may further comprise obtaining at least a part of a remotely adjusted configuration of the at least one of the at least one local machine learning model from the at least one remote apparatus. The remotely adjusted configuration may based at least partially on at least one locally adjusted configuration originating from a different apparatus. When the configuration is of a certain machine learning model, this may for instance denote that the configuration is specific to a kind of machine learning model (e.g., weights for a neural network) or that a certain format of configuration is specific to the specific architecture of the used machine learning model (e.g., number of synapses in a neural network).

For instance, a first contaminated remotely adjusted configuration may be received from a first remote apparatus (e.g., locally trained on personal data of the individual first apparatuses) and a second clean remotely adjusted configuration from a second remote apparatus (e.g., locally trained on general data).

According to an embodiment of the first example aspect, the controlling at least one actor comprises at least one (e.g., certified, e.g., authorized) application interfacing with at least one of
- at least one of the at least one machine learning module (e.g., the first contaminated and/or the second clean, e.g., only the second or both the first and the second),
- at least one of the at least one sensor interface (e.g., may be prohibited as recipient data may be extracted from sensors),
- at least one of the at least one actor interface, or
- the gating module (e.g., application is prohibited from directly interfacing with the access means).

In order to protect sensitive personal data, any software module and/or application (Vapp) to be installed on the first apparatus needs to be authorized and/or certified. For instance, a trusted entity such as a manufacturer-owned software provisioning system may be used to enable an installation and/or update of applications on the first apparatus. Therefore, the Vapps will first be stored on a server (Vstore) and checked first, before the customer can upload the selected Vapps to the Vibes. Any Vapp on Vstore is considered as certified and can run on a special operating system (V-OS) separating the hardware access from Vapps.

The application (Vapp) may be allowed to interface with one of the above modules, e.g., with at least one machine learning model, with at least one sensor interface, with at least one actor interface and/or with the gating module restricting access to the removable storage element. The gating module may for instance be implemented as a secured operating system layer.

According to an embodiment of the first example aspect, the method further comprises an application isolation layer means, wherein the application isolation layer (V-OS) means are configured to restrict and/or prevent (e.g., any) data exchange between the at least one application (Vapp).

By preventing applications from exchanging information with one another, security and protection of data is enhanced.

According to an embodiment of the first example aspect, the communicating are configured to at least one of:
- periodically (e.g., at an (e.g., fixed) interval, e.g., of 5 s) poll information (e.g., data and/or at least one configuration of at least one of the at least one machine learning model) and/or commands from the at least one remote apparatus (e.g., triggered by a third apparatus, e.g., a mobile device, e.g., running an application);
- obtain (e.g., and accept) commands via a local communication technology (e.g., WLAN, Bluetooth, Zigbee) from a third apparatus; or
- reject (e.g., any) commands (e.g., initiated by and/or) obtained (e.g., without previous polling of the device) from the remote apparatus.

For instance, the method according to the first example aspect and/or the first apparatus may be configured to request information from at least one remote apparatus. For instance, such information may comprise data (e.g., about the weather), commands (e.g., a user-triggered request for adjusting at least one parameter of an appliance) and/or configurations (e.g., remotely adjusted configurations).

By (e.g., only) polling for information but not listening continuously for remote data, an added layer of security may be achieved. The frequency at which remote parties may attempt to interact with the first apparatus are limited and the first apparatus may poll at a known and trusted remote server, thus drastically reducing the risk of accepting information (e.g., in particular, commands) from a harmful source.

The first apparatus may obtain at least one command from a third apparatus, e.g. by a local communication technology. The first apparatus may accept such local commands or may follow a more sophisticated verification method as outlined below.

The first apparatus may in particular reject commands that have been issued by a remote apparatus without before polling for such commands.

According to an example, in order to enable a safe control of building services by a user, a mobile phone app on a cell phone may be enabled to send a broadcasting signal (e.g., WLAN and/or Bluetooth) to the first apparatus, e.g., without handshaking. The signal may have a certain structure, e.g. comprising an ID and/or a fixed pattern. Such a signal may contain a command such as for instance could be "brighter" or "darker" or "retrieve command". The first apparatus may be configured to receive the signal and, in response to receiving the signal, connect to a remote apparatus (e.g., a dedicated server) and to ask (e.g., poll) whether there (e.g., truly) is a command for it. Such a command may in the meantime have been transferred by the app to the remote apparatus and the command may be retrieved by the first apparatus from the remote apparatus.

Further commands may be received as well. For instance, such further commands may be sent by websites and the like. All these commands are at the remote server. The first apparatus may then periodically poll for new commands. The commands may thus be fetched asynchronously at a suitable time.

According to an embodiment of the first example aspect, the method further comprises providing data captured by at least one of the at least one sensor to an (e.g., fire) alarm system.

According to an embodiment of the first example aspect, an apparatus performing and/or controlling the method is communicatively connected to a (e.g., fire) alarm system of the one or more living or working unit, in particular wherein the apparatus is configured to provide data captured by at least one of the at least one sensor to the (e.g., fire) alarm system.

It has been recognized that the first apparatus and connected sensors may provide valuable information about a current state of a one or more living or working unit. Such information may be particularly valuable to avoid mold or in case of an emergency where for instance a source of a fire has to be located. It is thus proposed to provide data captured by at least one of the at least one sensor to an alarm system, in particular a fire alarm system.

According to a second example aspect, a method is disclosed (e.g., performed and/or controlled by a second apparatus, e.g. a server) comprising:
- communicating with at least two local apparatus (e.g., edge device), wherein the communicating comprises obtaining at least a respective part of a respective at least one locally adjusted configuration of a respective local machine learning model from the at least two local apparatus;
- remotely training (e.g., by Federated Learning), wherein the remote training comprises determining a remotely adjusted (e.g., trained) configuration (e.g., weights) of at least one of the local machine learning model using the at least two locally adjusted configurations; and
- wherein the communicating further comprises providing at least a part of the remotely adjusted configuration to at least one of the at least two local apparatus
or alternatively (e.g., to the steps above) comprising:
- obtaining at least a respective part of a respective at least one locally adjusted configuration of a respective local machine learning model from the at least two local apparatus;
- remotely training (e.g., by Federated Learning), wherein the remote training comprises determining a remotely adjusted (e.g., trained) configuration (e.g., weights) of at least one of the local machine learning model using the at least two locally adjusted configurations; and
- providing at least a part of the remotely adjusted configuration to at least one of the at least two local apparatus.

The features disclosed with respect to the first aspect are disclosed, where applicable, to the second apparatus as well.

The method according to the second example aspect may for instance be performed and/or controlled by a second apparatus (e.g., according to the second example aspect). The second apparatus may for instance comprise means for performing and/or controlling the actions as specified by the method according to the second example aspect. For instance, the second apparatus may comprise at least one processor for executing computer program code for performing the actions, at least one memory storing the program code, or both. Alternatively, the second apparatus may comprise for instance circuitry that is designed to implement the actions, for instance implemented in a chipset or a chip, like an integrated circuit. In general, the second apparatus and in particular the means may comprise for instance one or more processing means or processors.

The at least two local apparatus may in particular correspond, respectively, to a first apparatus according to the first example aspect.

The remotely training (e.g., federated learning) may for instance correspond to a central federated learning, e.g., implemented by a central federated learning server, wherein the second apparatus takes the role of a central server orchestrating the joint training of configurations obtained from the at least two local apparatuses.

For instance, a remotely adjusted configuration (e.g., a contaminated remotely adjusted configuration based on personal occupant data) may be identical for multiple (e.g., the at least two) first (e.g., local) apparatus. For instance, in this way, remotely adjusted configurations may be unspecific to occupants and may be remotely computed and shared with other parties (e.g., the local apparatus of other occupants) without violating personal rights or occupants.

Additionally or alternatively, a remotely adjusted configuration (e.g., a clean remotely adjusted configuration based on general, impersonal data) may be specific to a given first apparatus. In this way, for instance, one or more living or working unit specifics may be preserved in the remotely adjusted configuration provided to individual first apparatus. As building information is not personal, the individual remotely adjusted configuration may be computed and provided without violating any personal rights.

According to an embodiment of the second example aspect, the at least two locally adjusted configurations of at least one of the at least two local machine learning models at least one of
- are free of personal data (e.g., personal information cannot be reconstructed based on the configuration) and/or
- respectively comprise a first contaminated locally adjusted configuration (e.g., based on personal data; e.g., while personal data is impossible to reconstruct) and a second clean locally adjusted configuration (e.g., based on general data).

According to an embodiment of the second example aspect, the remote training comprises
- a first contaminated remote training comprising determining a remotely adjusted configuration of at least one of the at least two machine learning models, based on a respective first contaminated locally adjusted configuration of the at least two local machine learning models of the at least two local apparatus and
- a second clean remote training comprising determining a remotely adjusted configuration of at least one of the at least two machine learning models, based on a respective second clean locally adjusted configuration of the at least two local machine learning models of the at least two local apparatus.

According to a third example aspect, a method is disclosed (e.g., performed and/or controlled by a first and a second apparatus, e.g. a server) comprising:
- by at least one of at least two local apparatus (e.g., first apparatus according to the first example aspect; e.g., edge device):
   - accessing (e.g., exchanging data with) at least one storage element for storing personal occupant data, wherein the access means comprise a receptacle configured to removably hold the storage element (e.g., storage card) and to access the storage element in a wired way, wherein the personal occupant data comprises (e.g., behavioral) information regarding (e.g., at least one behavior of) at least one occupant of a building, wherein the access means are protected by at least one security layer means (e.g., part of the apparatus; e.g., software) configured to prevent unauthorized access to the personal occupant data stored by the at least one storage element;
   - locally processing of at least parts of the personal occupant data, wherein the locally processing comprises locally adjusting (e.g., training) a configuration (e.g., weights) of at least one of at least one (e.g., a first contaminated) local machine learning model (e.g., executed on the device) using at least the personal occupant data; and
   - controlling at least one actor of the building based on the local processing; and
- by at least one remote apparatus (e.g., server device; e.g., second apparatus according to the second example aspect):
   - communicating with the at least two local apparatus (e.g., edge device), wherein the means for communicating are configured to obtain at least a respective part of a respective at least one locally adjusted configuration of a respective local machine learning model from the at least two local apparatus;
   - remote training (e.g., Federated Learning), wherein the remote training comprises determining a remotely adjusted (e.g., trained) configuration (e.g., weights) of at least one of the obtained locally adjusted configurations using the at least two locally adjusted configurations; and
   - wherein the communicating further comprises providing at least a part of the remotely adjusted configuration to at least one of the at least two local apparatus.

### BRIEF DESCRIPTION OF THE FIGURES

- Fig. 1: shows a block diagram illustrating an embodiment according to the first, second and/or third example aspect of the disclosure;
- Fig. 2a,b: show an embodiments of the first example aspect;
- Fig. 3: shows a floor diagram illustrating an embodiment according to the first, second and/or third example aspect of the disclosure;
- Fig. 4a,b: show schematic diagrams illustrating embodiments according to the first, second and/or third example aspect of the disclosure;
- Fig. 5a,b: shows schematic diagrams illustrating embodiment according to the first, second and/or third example aspect of the disclosure;
- Fig. 6: shows a flow chart illustrating an embodiment according to the first example aspect of the disclosure;
- Fig. 7: shows a flow chart illustrating an embodiment according to the second example aspect of the disclosure.

### DETAILED DESCRIPTION OF THE FIGURES

The following description serves to deepen the understanding of the present disclosure and shall be understood to complement and be read together with the description of example embodiments of the present disclosure as provided in the above SUMMARY section of this specification.

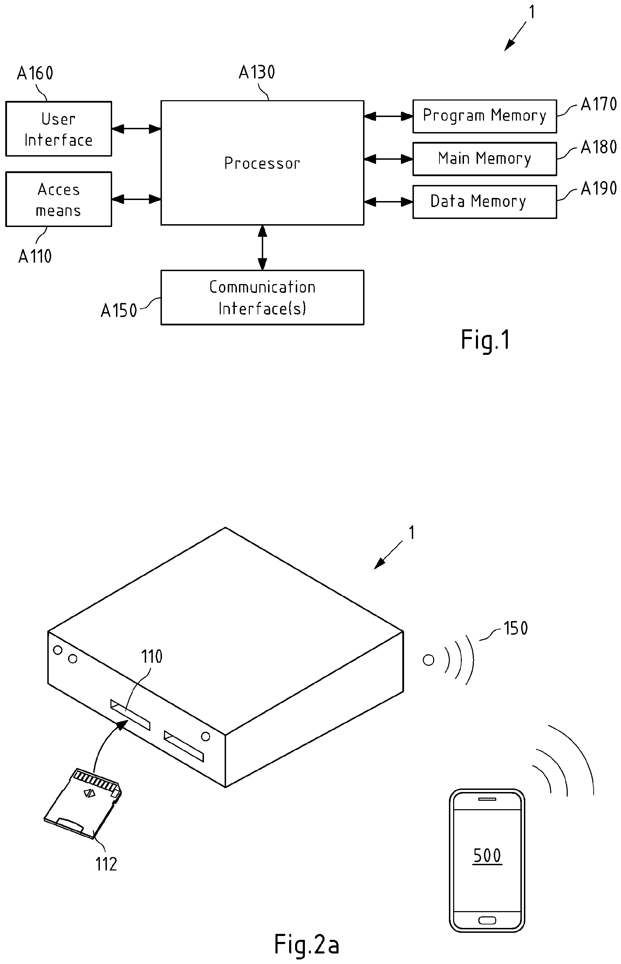

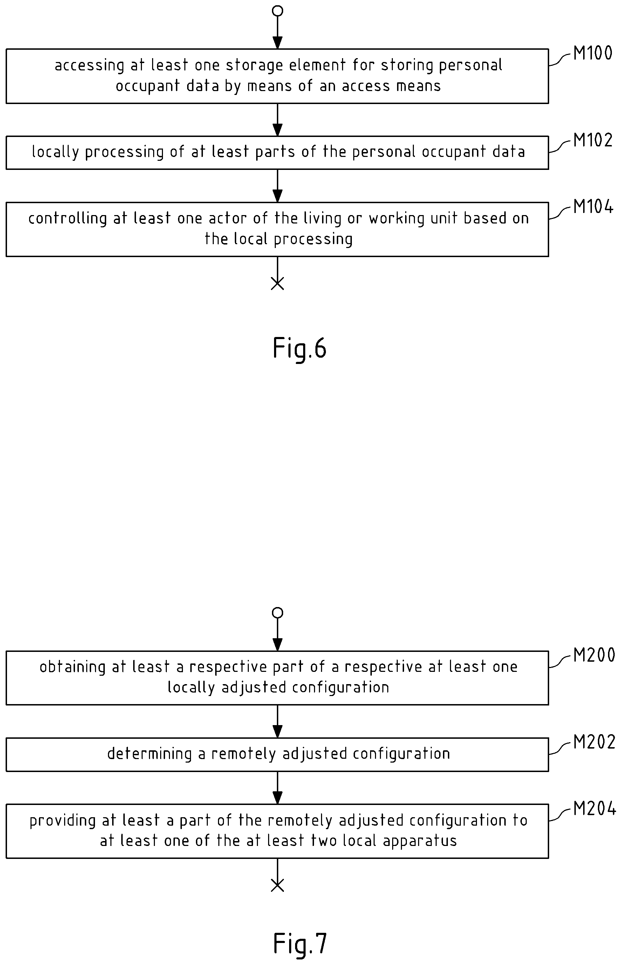

Fig. 1 shows an example block diagram of a first apparatus (e.g., according to the first example aspect). The second apparatus, according to the second example aspect, may comprise same and/or similar elements. The first apparatus 1 may perform a method according to the first example aspect. The first apparatus 1 may comprise at least one access means A110 which may comprise a receptacle for a removable storage element. The first apparatus 1 may comprise a user interface A160, a program memory A170, a main memory A180, and a data memory A190. Further, it comprises a processor A130. The first apparatus 1 may further comprise functional units which correspond to the respective actions M100, M102 and M104 as shown in the flowchart of figure 6 below, respectively. A functional unit may for instance correspond to a code block within a memory A170, A180, or A190. The functional units may for instance at least in part be connected to and/or control the access means A110, for instance by an intermediary or a gating means.

Fig. 2a shows an example embodiment of a first apparatus 1 (e.g., according to the first example aspect). The first apparatus comprises processing means such as for instance a processor and memory as shown schematically in Fig.1, for instance covered in a housing. For instance, the elements may be housed in a non-removable housing, for instance cast in a hardened material, for instance in a (e.g., synthetic) resin. The components may thus be protected against manipulation. The first apparatus 1 comprises at least one access means 110. The access means 110 comprise a receptacle configured to removably hold a storage element 112. The storage element 112 shown corresponds to storage card 112 but may as well be another type of removable storage element 112.

The first apparatus 1 further comprises a communication interface 150. The communication interface may in particular be configured to communicate via a wireless local communication technology. A wireless local communication technology may for instance be one of such as Bluetooth, Zigbee, and/or WLAN. The communication interface 150 may alternatively or additionally be configured to communicate via a mobile radio communication system such as a 2G/3G/4G/5G/6G communication system. For instance, the communication interface 150 may be configured to communicate with at least one remote device (not shown) and/or with at least one third apparatus, for instance a shown mobile terminal 500.

The mobile terminal 500 may for instance correspond to a laptop, a mobile phone, a tablet, a smart watch, an internet of things, IoT, device, an industrial IoT, IIoT, device, an ambient IoT, AIoT, device and/or combinations thereof. The mobile terminal 500 may for instance comprise (e.g., an installed) application which may communicate at least one setting and/or command to the first apparatus 1. The first apparatus 1 may be in turn configured to poll a respective confirmation and/or command from a remote device, e.g., a server, e.g., via the communication interface 150.

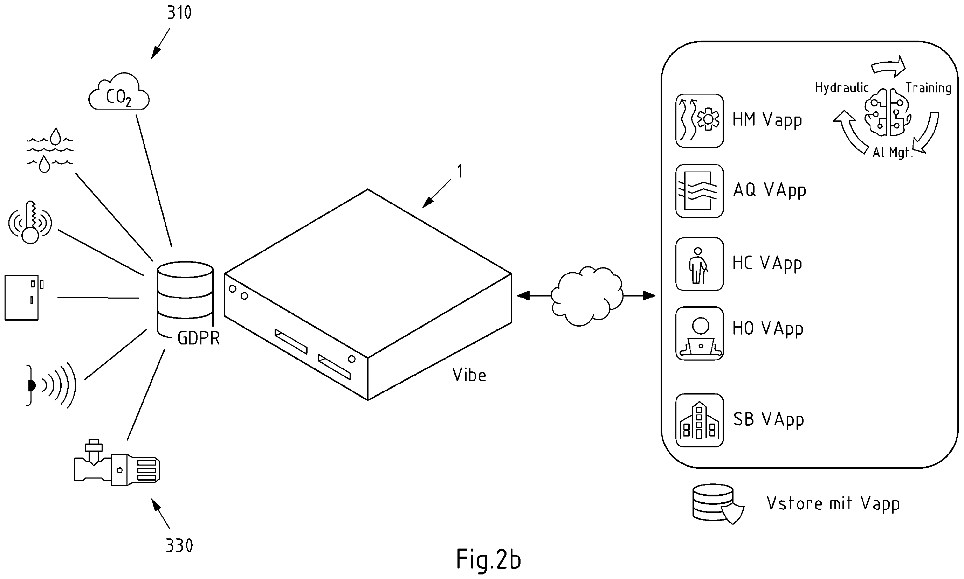

Fig. 2b demonstrates an ecosystem involving a first apparatus 1 performing and/or controlling the method according to the first example aspect. The first apparatus (Vibe) 1 is connected to various sensors 310, e.g., one or more CO2 sensors, one or more humidity sensors, one or more temperature sensors, one or more door and/or window sensors, one or more presence sensors. The Vibe 1 may further be connected to at least one actor such as a shown thermostat.

On the first apparatus 1, at least one or more applications (Vapps) may be installed. The applications may be certified and/or obtained from a provisioning server, termed Vstore. By obtaining the Vapps from a provisioning server, a closed ecosystem may be provided, ensuring that only trustworthy applications gain access to personal occupant data. Applications may stay in contact with the internet (e.g., in order to obtain data such as energy tariffs, weather data, information from other living or working units and/or combinations thereof. Different applications may have mutually different access rights, e.g., to certain parts of data (e.g., general or personal occupant data) and/or to certain allowed sensors (e.g., temperature), e.g., while others are restricted (e.g., presence sensors, cameras).

The applications may fulfil different functionalities such as for instance heat management, HM, air quality, AQ, management, home care, HQ, e.g., for the elderly, home office, HO, e.g., for estimating costs related to living or working units used for working at home, and/or smart building, e.g., for interacting and/or coordinating management of the living or working unit managed by the Vibe 1 with at least one other living or working unit.

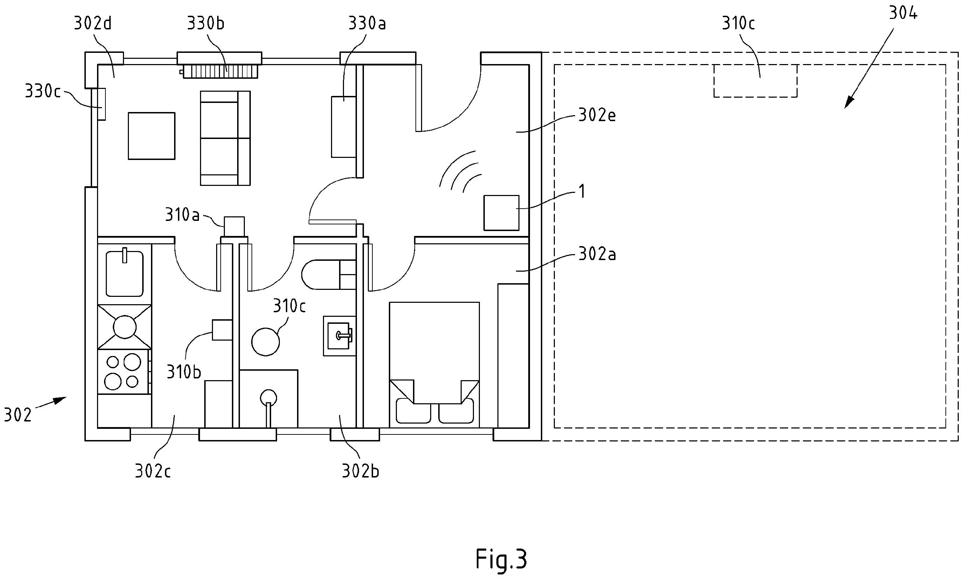

Fig. 3 shows an example building 302 in a floor plan. The building 302 may for instance correspond to an apartment and/or comprise multiple rooms, for instance, a bedroom 302a, a bathroom 302b, a kitchen 302c, a living room 302d and a hall 302e. The building may further comprise at least one or more technical appliances. The technical appliances may at least in part have at least one corresponding actor. The shown example for instance comprises an air conditioning 330a (e.g., controllable by an interface to a corresponding control unit; e.g., by wireless communication, e.g., by WLAN and/or an infrared interface typically used by a remote control), a heater (e.g., heating radiator) 330b (e.g., controllable by a thermostat, e.g., a smart thermostat), a controlled window 330c (e.g., controlled by at least one motor), and a boiler 330d (e.g., controlled by a respective control unit, e.g., through a communication interface). Various other technical appliances may be envisioned, e.g.,, at least one lighting appliance, a room scent dispenser, a cleaning appliance such as for instance, a cleaning robot (e.g., vacuum and/or wiping robot) and/or combinations thereof.

The building 302 may further comprise at least one sensor 310. Shown are a sensor 310a in the living room 302d which may for instance correspond to a temperature sensor, a gas sensor (e.g., air quality sensor), and/or a brightness sensor. Sensors may be provided in multiple rooms, such as for instance sensor 310b in the kitchen 302c. Sensor 310b in the kitchen 302c may for instance be a same kind of sensor as the sensor 310a of may be of a different type.

Actors 330 and/or sensors 310 may be communicatively connected to a first apparatus 1, e.g., according to the first example aspect. The first apparatus may be positioned inside the building 302.

The building 302 may be adjacent to another building 304, for instance a neighboring apartment 304.

According to embodiments, the first apparatus 1 (e.g., according to the first example aspect) may be communicatively connected to at least one sensor 310c in at least one building different from the building, e.g., the building in which the first apparatus 1 is positioned and/or in which at least one actor 330 is positioned and/or which is controlled by the first apparatus 1. It has been recognized that a state of a neighboring building may affect a behavior of the building.

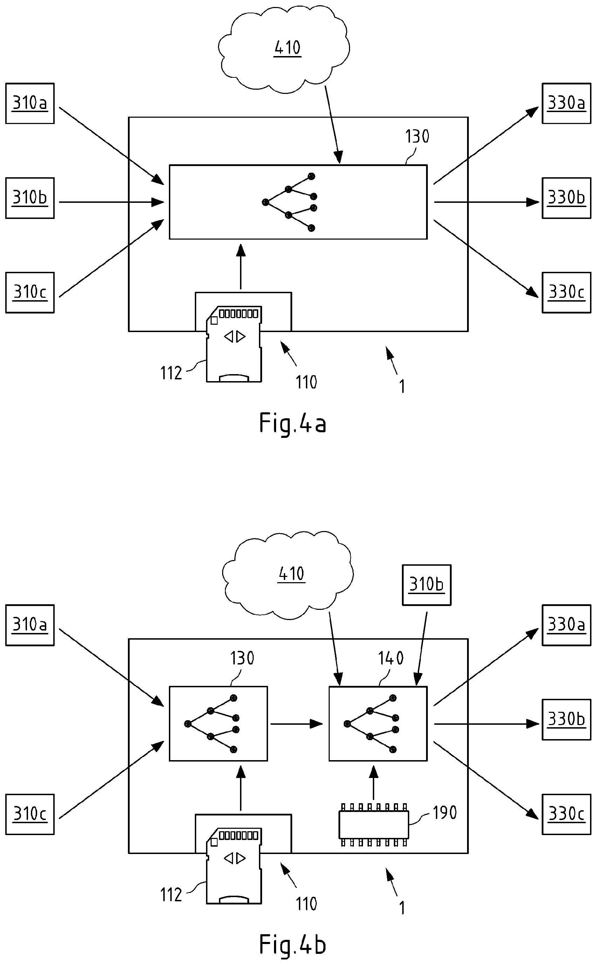

Fig. 4a shows an example structure of a first apparatus 1(e.g., according to the first example aspect). The first apparatus 1 is connected communicatively to at least one or more sensors 310a, 310b, 310c, e.g., by means of its communication interface 150. The first apparatus 1 further comprises access means 110. A removable storage element 112 is held by a receptacle of the access means 110.

The embodiment shows a machine learning model 130. The model 130 may for instance correspond to a respective circuitry and/or to a functional unit, e.g., to a respective computer program block. The machine learning model 130 may for instance comprise an artificial neural network. The machine learning model 130 may be trained using personal occupant data stored on the storage element 112 and/or at least one sensor 310a, 310b, 310c. The machine learning model 130 or a corresponding configuration may thus be considered contaminated as it is trained on personal data.

The machine learning model 130 may for instance, in addition to personal occupant data on the storage element 112 and/or sensor data from sensors 310a, 310b, 310c, be configured to obtain (e.g., and be trained on) general, impersonal data which may for instance be freely available on the internet 410. Such general data may for instance correspond to weather information, time information (e.g., season, day of the week, and/or time of the day), and/or information about energy prices (e.g., current electricity price).

The machine learning model 130 may be used to control at least one actor 330a, 330b, 330c. In particular, the machine learning model 130 may be used to predict at least one occupant behavior, control action and/or occupant preference, e.g., based on the personal occupant data stored on the storage element 112 and/or the sensor data from sensors 310a, 310b, 310c.

The machine learning model 130 and/or a corresponding adjusted configuration may be considered contaminated. It may in particular not be excluded to extract personal data from the machine learning model 130 and/or a corresponding configuration. In some embodiments, the machine learning model 130 may on the other hand be trained on personal occupant data and still be considered "clean", e.g., because no personal information can be extracted from an adjusted configuration of the machine learning model 130 (e.g., due to a limited number of degrees of freedom of the machine learning model 130).

The embodiment shown in Fig. 4b illustrates a similar architecture, yet with two machine learning models 130 and 140. The models 130,140 may for instance correspond to a respective circuitry and/or to a functional unit, e.g., to a respective computer program block. A first machine learning model 130 may be trained using personal occupant data stored on the storage element 112 and/or at least one sensor 310a, 310c. The machine learning model 130 or a corresponding configuration may thus be considered contaminated as it is trained on personal data.

The second machine learning model 140 on the other hand may be trained on data with which does not contain any personal information about the occupant. Such information may in particular correspond to the general data as detailed with respect to fig. 4a. Additionally, at least one sensor 310b may not convey any personal information. For instance, sensor 310b may measure an outside temperature on an outer wall of the building and/or may correspond to a sensor positioned in another building, different from the building automated by the first apparatus 1 and/or measure a state of charge of a storage unit associated with the building. As the machine learning model 140 is trained on general, impersonal data, it may be considered clean and so may be a corresponding adjusted configuration. The adjusted configuration of machine learning model 140 may thus be stored on a data memory 190 of the apparatus which may in particular be non-removable, e.g., soldered to a PCB of the apparatus 1.

The clean machine learning model 140 may for instance be trained to predict how the building reacts to certain actor actions. An example may for instance be that machine learning model 140 may predict a duration required for water in a boiler of a bathroom top reach a sufficiently high temperature for showering and/or a duration, given a certain opening degree of a windows, until an air quality of a predefined threshold (e.g., an air quality as desired by the occupant) may be reached.

According to an architecture shown in Fig. 4b, the contaminated machine learning model 130 may provide a prediction of at least one of a personal preference, a behavior and/or a control action of the occupant. Such output may be used by the clean machine learning model 140 to predict which actor control measures may be required in order to achieve a state according to the predicted preference, by the predicted control action and/or a state which matches predicted occupant behavior.

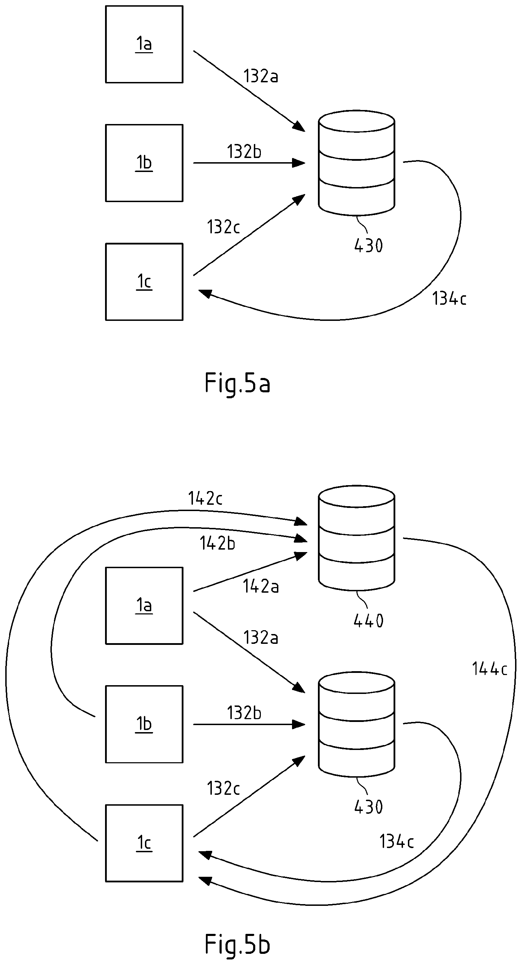

Fig. 5a illustrates a federated learning approach. In the embodiment, multiple first apparatuses 1a, 1b, 1c (e.g., according to the first example aspect) may transmit a respective locally adjusted configuration 132a, 132b, 132c to a remote apparatus, e.g., a server, 430 (e.g., according to the second example aspect). They may do so by their respective communication interfaces. The configurations may for instance be contaminated and/or clean. The remote apparatus 430 computes a remotely adjusted configuration 134c which takes into account all of the three locally adjusted configurations 132a, 132b, 132c. The three locally adjusted configurations 132a, 132b, 132c are thus combined into a remotely adjusted configuration 134c. The remotely adjusted configuration 134c may thus be based on all locally adjusted configurations 132a, 132b, 132c. The remotely adjusted configuration 134c is provided to at least one or all of the first apparatuses 1a, 1b, 1c. The remotely adjusted configuration 134c may for instance be identical for all of the first apparatuses 1a, 1b, 1c and/or may be specific to the first apparatus to which it is sent, e.g., here, to the first apparatus 1c.

The locally adjusted configurations 132a, 132b, 132c may for instance be contaminated with personal data and/or be clean (e.g., trained on general, impersonal data).

In another embodiment of Fig. 5b, the first apparatuses 1a, 1b, 1c may transmit contaminated locally adjusted configurations 132a, 132b, 132c, e.g., from a first machine learning model as the one in Fig. 4b, numeral 130, to a first remote apparatus 430 in order to obtain a respective remotely adjusted configuration 134 back from the remote apparatus 430. Additionally, clean locally adjusted configurations 142a, 142b, 142c, e.g., from a second machine learning model as the one in Fig. 4b, numeral 140, to a second remote apparatus 440 in order to obtain a respective remotely adjusted configuration 144 back from the remote apparatus 440. For instance, the remote apparatus 430 handling contaminated configurations may be located in a first country (e.g., a country of the European Union) while the second remote apparatus 440 may for instance be positioned in any country, e.g., because no sensitive personal data may have been used to obtained the clean locally adjusted configurations 142a, 142b, 142c.

Fig. 6 shows a flowchart of an example embodiment according to the first example aspect, for instance performed and/or controlled by a first apparatus (e.g., edge device). In a first step M100, the method comprises accessing at least one storage element for storing personal occupant data by means of an access means. The accessing may for instance be performed by intermediary of a gating means which restricts access to authorized modules (e.g., applications). In a second step M102, the method comprises locally processing of at least parts of the personal occupant data. Such local processing may for instance comprise combining the personal occupant data with other data such as sensor data and/or general, impersonal data and/or may comprise feeding the personal occupant data to a machine learning model. The method further comprises a step M104 in which at least one actor of a building in which the occupant resides is controlled based on the local processing. For instance, a occupant preference may be predicted based on the personal occupant data and an actor may be controlled to align a building state with the occupant preference.

Fig. 7 shows a flowchart of an example embodiment according to the second example aspect, for instance performed and/or controlled by a second apparatus (e.g., remote device). In a first step M200, the method comprises obtaining (e.g., receiving) at least a respective part of a respective at least one locally adjusted configuration from a first apparatus (e.g., according to the first example aspect). The method further comprises, in step M202, remotely training (e.g., adjusting) at least one remotely adjusted configuration based on at least two obtained locally adjusted configurations. The remotely adjusted configuration is subsequently provided (e.g., transmitted) to at least one or more of the first apparatus in step M204.

A decentralized artificial intelligence solution as proposed herein may runs locally, e.g., based on local data. Thus, autonomous device (e.g., actor) control is achieved in real time, even without an internet connection. This yields a high availability (e.g., 100% availability in time). Through local adaptation and by relying on locally stored personal occupant data, a respective AI solution (e.g., VIBE) adapts to an individual user (e.g., occupant). This new approach leaves currently available solutions behind. For instance, a cloud solution, wherein an artificial intelligence is implemented in a remote device makes local devices' control dependent on the availability of the internet connection and cloud. Control commands can arrive later (latency) or incorrectly. One central cloud solution is provided for multiple (e.g., all) users, thus leaving no room for individual adaptation. Especially, cloud solutions are prohibited from using person occupant data and thus cannot accurately adapt to the occupants' individual needs. Another example, automation, also known as smart home, provides predefined cloud solution for a multitude of (e.g., all) users (e.g., occupants), wherein a first type may be a self-configuration and a second type of automation a configuration by a professional.

The methods according to all aspects of the disclosure enable a data protection secure eco system. By means of a with removable storage element (e.g., separate ID card), users can receive personalized building management without losing control of their personal data. An operating system ensures data protection, A provisioning service (e.g., a server and/or a cloud service), e.g., called Vstore, may enable to register the owner/user of the first apparatus with a list of (certified) Vapps from a library offered by the provisioning service, The first apparatus may be obtained as hardware from third parties. Access to private occupant data makes an artificial intelligence (e.g., running locally on the first apparatus) much more effective (e.g., AI results are only as good as the quality of the input data). Access to the important personal occupant data thus achieves much better results.

Any embodiment illustrated in this specification is to be understood such that respective components involved are functionally interconnected. Such interconnections may be direct or indirect, with any number or combination of intermediate components, additionally or alternatively, there may be (e.g., only) a functional relationship between the components.

Furthermore, the term "circuitry" in this text may refer to any of the following:
(a) hardware-only circuit implementations (e.g., implementations in only analog and/or digital circuits)
(b) combinations of circuits and software (and/or firmware), such as: (i) for a combination of processor(s); or (ii) for sections of processor(s)/software (including digital signal processor(s), software and memory(s) that work together to cause a device, such as a cellular telephone, to perform various functions); and
(c) circuits, such as microprocessors or parts of microprocessors, that require software or firmware to operate, even if the software or firmware is not physically present.

This definition of the term "circuitry" applies to all uses of this term in this text, including in the claims. As another example, the term "circuitry" as used herein also includes an implementation comprising only a processor (or processors) or a portion of a processor and the associated software and/or firmware. The term "circuit" also includes, for example, a baseband integrated circuit or an integrated application processor for a cell phone.

Any of the processors referred to herein, including but not limited to the processors 130 of Figure 1, may be a processor of any suitable type. Each processor may include, but is not limited to, one or more microprocessors, one or more processors with associated digital signal processor(s), one or more processors without associated digital signal processor(s), one or more specialized computer chips, one or more field programmable gate arrays (FPGAS), one or more controllers, one or more application specific integrated circuits (ASICS), or one or more computers. The corresponding structure/hardware has been programmed to perform the described function.

In addition, any of the actions or steps described or illustrated herein may be implemented using executable instructions in a general purpose or special purpose processor and stored on a computer readable storage medium (e.g., diskette, memory, or the like) for execution by such a processor. References to a "computer readable storage medium" are to be understood to include specialized circuitry such as FPGAs, ASICs, signal processing devices, and other devices.

In addition, any of the actions described or illustrated herein may be implemented using executable instructions in a general-purpose or specialized processor and stored on a computer-readable storage medium (e.g., hard disk, memory, or the like) for execution by such a processor. References to a "computer-readable storage medium" should be understood to include specialized circuitry such as FPGAs, ASICs, signal processing devices, and other devices.

The phrase "A, or B, or C, or a combination thereof" or "at least one of A, B, and C" is not intended to be exhaustive and includes at least the following (i) A, or (ii) B, or (iii) C, or (iv) A and B, or (v) A and C, or (vi) B and C, or (vii) A and B and C.

It will be understood that the embodiments disclosed herein are exemplary only, and that any feature shown for a particular exemplary embodiment may be used with any aspect of the present disclosure alone, or in combination with any feature shown for the same or another particular exemplary embodiment, and/or in combination with any other feature not mentioned. It is further understood that any feature presented for an exemplary embodiment of a particular category may also be used in a corresponding manner in an exemplary embodiment of any other category.

## Claims

1. An apparatus (1) comprising:
- access means (110) for accessing at least one storage element (112) for storing personal occupant data, wherein the access means (110) comprises a receptacle configured to removably hold the storage element (112) and to access the storage element (112) in a wired way, wherein the personal occupant data comprises information regarding at least one occupant of a living or working unit (302), wherein the access means (110) are protected by at least one security layer means configured to prevent unauthorized access to the personal occupant data stored by the at least one storage element (112);
- means for locally processing of at least parts of the personal occupant data; and
- means for controlling at least one actor (330) of the living or working unit (302) based on the local processing.

2. The apparatus (1) according to claim 1, wherein
- the locally processing comprises locally adjusting a configuration of at least one of at least one local machine learning model (130, 140) using at least the personal occupant data and/or
- the processing comprises predicting at least one behavior of at least one occupant based on a locally adjusted configuration (132, 142) of the local machine learning model (130,140), in particular wherein the controlling at least one actor (330) of the living or working unit (302) is based on at least one of the at least one predicted behavior.

3. The apparatus according to claim 1 or 2, further comprising:
- at least one sensor interface for communicatively connecting to at least one sensor (310) , in particular wherein the apparatus is configured to store data captured by the sensor locally on the local storage element (102); and/or
- at least one actor interface for connecting to the at least one actor (330) .

4. The apparatus according to any of claim 1 to 3, wherein the at least one security layer means comprises at least one of
- a encryption and decryption module to write and access encrypted data stored on the at least one storage element (112) , or
- a gating module that restricts access to the at least one storage element to authorized and/or local applications.

5. The apparatus according to any of claims 1 to 4, wherein:
- the locally adjusted configuration (132, 142) of at least one of the at least one local machine learning model (130, 140) is free of personal data .

6. The apparatus according to any of claims 1 to 5, wherein the at least one machine learning model comprises at least two machine learning models (130, 140), wherein
- a first contaminated configuration (132) of a first (130) of the at least two machine learning models (130,140) is locally adjusted using at least parts of the personal occupant data and
- a second clean configuration (142) of the second (140) of the at least two machine learning models (130,140) is locally adjusted using general data.

7. The apparatus according to any of claims 1 to 6, further comprising means for communicating with at least one remote apparatus (430, 440) , wherein the means for communicating are configured to
- transmit at least a part of the locally adjusted configuration (132, 142) of at least one of the at least one local machine learning model (130,140) to at least one of the at least one remote apparatus (430, 440) and/or
- obtain at least a part of a remotely adjusted configuration (134c, 144c) of the at least one of the at least one local machine learning model (130,140) from the at least one remote apparatus (430, 440).

8. The apparatus according to any of claims 1 to 7, wherein the means for controlling at least one actor (330) comprise at least one application interfacing with at least one of
- at least one of the at least one machine learning module (130,140) ,
- at least one of the at least one sensor interface,
- at least one of the at least one actor interface, or
- the gating module.

9. The apparatus according to any of claims 1 to 8, wherein the local processing and/or the controlling at least one actor (330) comprises determining at least one starting time for at least one actor, in particular based on an efficiency and/or efficacy of the at least one actor.

10. The apparatus according to any of claims 1 to 9, wherein the means for communicating are configured to at least one of:
- periodically poll information and/or commands from the at least one remote apparatus ;
- obtain commands via a local communication technology from a third apparatus (500); or
- reject commands obtained from the remote apparatus.

11. The apparatus according to any of claims 1 to 10, wherein apparatus is communicatively connected to a alarm system of a living or working unit and/or a building, in particular wherein the apparatus is configured to provide data captured by at least one of the at least one sensor, or aggregated sensor data or analytics based on sensor data to the alarm system.

12. An apparatus (430, 440) comprising:
- means for communicating with at least two local apparatus (1a, 1b, 1c) , wherein the means for communicating are configured to obtain at least a respective part of a respective at least one locally adjusted configuration (132a, 132b, 132c, 142a, 142b, 142c) of a respective local machine learning model (130, 140) from the at least two local apparatus (1a, 1b, 1c);
- at least one means for remote training, wherein the at least one means for remote training is configured to determining a remotely adjusted configuration (132c, 142c) of at least one of the local machine learning model (130, 140) using the at least two locally adjusted configurations (132a, 132b, 132c, 142a, 142b, 142c); and
- wherein the means for communicating are further configured to provide at least a part of the remotely adjusted configuration (132c, 142c) to at least one of the at least two local apparatus (1a, 1b, 1c).

13. The apparatus according to claim 12, wherein the at least two locally adjusted configurations (132a, 132b, 132c, 142a, 142b, 142c) of at least one of the at least two local machine learning models (130, 140) at least one of
- are free of personal data and/or
- respectively comprise a first contaminated locally adjusted configuration (132a, 132b, 132c) and a second clean locally adjusted configuration (142a, 142b, 142c) .

14. The apparatus according to claim 12 or 13, wherein the at least one means for remote training comprise
- a first contaminated remote training means configured to determine a contaminated remotely adjusted configuration (132c) of at least one of the at least two machine learning models (130), based on a respective first contaminated locally adjusted configuration (132a, 132b, 132c) of the at least two local machine learning models (130) of the at least two local apparatus (1a, 1b, 1c) and
- a second clean remote training means configured to determine a clean remotely adjusted configuration of at least one of the at least two machine learning models (130, 140), based on a respective second clean locally adjusted configuration (142a, 142b, 142c) of the at least two local machine learning models (140) of the at least two local apparatus (1a, 1b, 1c).

15. A system comprising:
- at least two local apparatus (1a, 1b, 1c) , in particular configured to control and/or perform a method according to any of claims 1 - 11, comprising:
- access means (110) for accessing at least one storage element (112) for storing personal occupant data, wherein the access means (110) comprise a receptacle configured to removably hold the storage element (112) and to access the storage element in a wired way, wherein the personal occupant data comprises information regarding at least one occupant of a building (302), wherein the access means (110) are protected by at least one security layer means configured to prevent unauthorized access to the personal occupant data stored by the at least one storage element (112);
- means for locally processing of at least parts of the personal occupant data, wherein the locally processing comprises locally adjusting a configuration (132a, 132b, 132c, 142a, 142b, 142c) of at least one of at least one local machine learning model (130, 140) using at least the personal occupant data; and
- means for controlling at least one actor (330) of the living or working unit (302) based on the local processing; and
- at least one remote apparatus (430, 440), in particular configured to control, monitor and/or perform a method according to any of claims 12- 14, , comprising:
- means for communicating with the at least two local apparatus (1a, 1b, 1c) , wherein the means for communicating are configured to obtain at least a respective part of a respective at least one locally adjusted configuration (132a, 132b, 132c, 142a, 142b, 142c) of a respective local machine learning model (130, 140) from the at least two local apparatus (1a, 1b, 1c);
- at least one means for remote training, wherein the at least one means for remote training is configured to determining a remotely adjusted configuration (134c, 144c) of at least one of the local machine learning model (130, 140) using the at least two locally adjusted configurations (132a, 132b, 132c, 142a, 142b, 142c); and
- wherein the means for communicating are further configured to provide at least a part of the remotely adjusted configuration (134c, 144c) to at least one of the at least two local apparatus (1a, 1b, 1c).
